Europäisches Patentamt

European Patent Office

Office européen des brevets

(11) Publication number: **0 248 644**
**A2**

# EUROPEAN PATENT APPLICATION

(21) Application number: 87304891.2

(22) Date of filing: 03.06.87

(51) Int. Cl.⁴: **G 01 F 1/32**

(30) Priority: 06.06.86 GB 8613852

(43) Date of publication of application:
09.12.87 Bulletin 87/50

(84) Designated Contracting States:
AT BE CH DE ES FR GB GR IT LI LU NL SE

(71) Applicant: **NEPTUNE MEASUREMENT LIMITED**
P.O. Box 2 Dobcross
Oldham Lancashire, OL3 5BD (GB)

(72) Inventor: **Mantel, Jack**
231 Market Place Compstall
Stockport Cheshire SK6 5HZ (GB)

(74) Representative: **Allman, Peter John et al**
MARKS & CLERK Suite 301 Sunlight House Quay Street
Manchester M3 3JY (GB)

(54) Vortex shedding body.

(57) A vortex shedding bluff body for generating vortices in a fluid flowing through a passageway within which the bluff body is supported. The bluff body extends only partially across the width of the passageway such that a significant proportion of the fluid flow occurs between the free end of the bluff body and the side of the passageway towards which the bluff body extends. A relatively short bluff body extending for example only one fifth of the way across a passageway can generate vortices the characteristics of which enable an accurate measurement of the fluid flow rate to be derived. This means that the introduction of a vortex shedding bluff body need not significantly reduce the carrying capacity of the pipe into which it is introduced.

EP 0 248 644 A2

**Description**

VORTEX SHEDDING BODY

The present invention relates to a vortex shedding body, hereinafter referred to as a bluff body, for use in for example flow meters relying upon the so-called von karman vortex phenomenon. It is well known to introduce a bluff body into a stream of fluid flowing along a pipe and to monitor the frequency of production of vortices shed by that bluff body to derive a measurement of the rate of flow of the fluid stream. Devices of this general type have been widely described and representative examples are disclosed in Published International Patent Application No. WO 83/03667 and British Patent Specification No. 2 160 313.

It has been conventional practice to arrange for the bluff body to extend across the full width of the pipe through which the fluid stream passes, it being thought that if the bluff body does not extend across the full width of the pipe the relationship between the frequency of vortex generation and the rate of fluid flow will not be sufficiently predictable to enable the taking of meaningful flow rate measurements. Generally the bluff body is secured at its two ends to opposite sides of the pipe although proposals have been made as described in Published International Patent Appln. No. WO 80/00186 and Published British Patent Specification No. 2 046 916 to have a relatively small gap between one end of the bluff body and an adjacent surface supported by the pipe so as to enable the bluff body to vibrate. In the device as described in the latter two documents however the gap defined at the end of the bluff body is so small in relative terms that only an insignificant amount of fluid can flow therethrough and therefore for all practical purposes related to fluid flow the bluff body does in fact extend fully across the width of the pipe. Because the bluff body extends across the full width of the pipe it represents a significant obstruction to fluid flowing therethrough and this means that a bluff body cannot be easily introduced into a pipe without effectively reducing the carrying capacity of that pipe to a significant extent.

It is an object of the present invention to obviate or mitigate the above problems.

According to the present invention there is provided a vortex shedding bluff body for generating vortices in a fluid flowing through a passageway within which the bluff body is supported, wherein the bluff body extends only partially across the width of the passageway such that a significant proportion of the fluid flow occurs between the free end of the bluff body and the side of the passageway towards which the bluff body extends.

It has surprisingly been discovered that even a relatively short bluff body extending for example only one fifth of the way across a passageway can generate vortices the characteristics of which enable an accurate measurement of the fluid flow rate to be derived. This means that the introduction of a vortex shedding bluff body need not necessarily significantly reduce the carrying capacity of the pipe into which it is introduced. The principle thus described can be applied to vortex shedding flow meters of conventional design but in which the full diameter bluff body has been substituted by a short bluff body, or a short bluff body could be inserted into the pipe wall and suitably sealed. Furthermore the bluff body can be easily manufactured and may be incorporated into a narrow profile assembly which occupies only the same amount of space as a conventional orifice plate. This means that a flow meter can be inserted into an existing pipeline simply by removing a conventional orifice plate and inserting a flat plate supporting a single short bluff body extending partially thereacross.

The present invention will now be described, by way of example, with reference to the accompanying drawings, in which :-

Fig. 1 is a schematic perspective view of a bluff body having a cross sectional shape of a conventional form which shape may be used in conventional vortex shedding flow meters or in embodiments of the present invention;

Fig. 2 is a sectional view through a conventional flow meter showing the positioning of a bluff body of the general shape as illustrated in Fig. 1 inside a pipe;

Fig. 3 is an end view in the direction of arrows III-III in Fig. 2 showing the bluff body extending across the full width of the pipe; and

Fig. 4 is a view of a bluff body in accordance with the present invention, the differences between Figure 3 and 4 illustrating the difference between an embodiment in accordance with the prior art and an embodiment of the present invention.

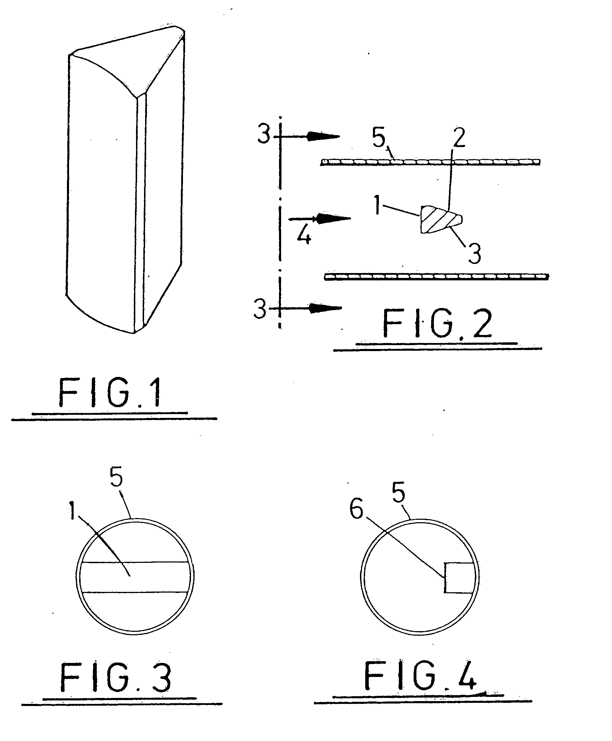

As shown in Figs. 1 and 2, the bluff body comprises a substantially flat face 1 and tapering faces 2 and 3, the face 1 being directed towards the direction of flow of fluid indicated by arrow 4. The bluff body is supported in a pipe 5 and extends across the full width thereof as is apparent from Fig. 3.

In accordance with the present invention the length of the bluff body is reduced so that it extends only a relatively short distance across the width of the pipe 5. It will be seen that the end 6 of the bluff body stops short of the axis of the pipe and therefore there is a large gap between the end 6 and the inner surface of the pipe 5 towards which the end 6 faces. A significant proportion of the fluid flow passes through this gap. Despite this however vortexes shed by the bluff body 6 exhibit characteristics from which an accurate measure of the rate of flow of fluid through the pipe can be derived using conventional techniques. Thus a flow meter incorporating a bluff body in accordance with the present invention can provide an equivalent performance to a flow meter incorporating a prior art bluff body of the type illustrated in Fig. 3 without it being necessary to significantly obstruct the cross section of the pipe. This represents a major improvement over the prior art and enables vortex shedding flow meters to be used in a wider range of applications. Furthermore it is easier to fabricate a support for a bluff body of the type in accordance with the present invention and such a bluff body may be incorporated in a relatively thin plate which can be substituted for a conventional orifice plate.

## Claims

1. A vortex shedding bluff body for generating vortices in a fluid flowing through a passageway within which the bluff body is supported, wherein the bluff body extends only partially across the width of the passageway such that a significant proportion of the fluid flow occurs between the free end of the bluff body and the side of the passageway towards which the bluff body extends.

2. A vortex shedding bluff body according to claim 1, wherein the bluff body extends approximately one fifth of the way across the passageway.

3. A vortex shedding bluff body according to claim 1, wherein the bluff body is incorporated in a flat plate.

4. A vortex shedding bluff body according to claim 1, wherein the bluff body comprises a substantially flat face directed towards the direction of flow of fluid and two tapering faces extending downstream from the said flat face.

0248644

FIG.1

FIG.2

FIG.3

FIG.4